# EUROPÄISCHE PATENTSCHRIFT

(11) **EP 3 340 412 B1**
(45) Veröffentlichungstag und Bekanntmachung des Hinweises auf die Patenterteilung: **06.03.2019**
(21) Anmeldenummer: 16205965.3
(22) Anmeldetag: 21.12.2016
(51) Int. Cl.: H02J 1/10, H02J 7/00

(54) **ENERGIEVERSORGUNGSSCHALTUNG, ELEKTRISCHES ANTRIEBSSYSTEM UND FLUGKÖRPER MIT EINEM ELEKTRISCHEN ANTRIEBSSYSTEM**
ENERGY SUPPLY CIRCUIT, ELECTRIC PROPULSION SYSTEM AND MISSILE WITH AN ELECTRIC DRIVE SYSTEM
CIRCUIT D'ALIMENTATION ÉLECTRIQUE, SYSTÈME DE COMMANDE ÉLECTRIQUE ET MISSILE COMPRENANT UN SYSTÈME DE COMMANDE ÉLECTRIQUE

(43) Veröffentlichungstag der Anmeldung: 27.06.2018
(73) Patentinhaber: Airbus Defence and Space GmbH, 82024 Taufkirchen (DE)
(72) Erfinder: FRIEDL, Stephan, 83707 Bad Wiessee (DE); STEINER, Gerhard, 87719 Mindelheim (DE)
(74) Vertreter: Isarpatent

(56) Entgegenhaltungen:
- US-A1- 2007 273 216

## Beschreibung

### TECHNISCHES GEBIET

Die vorliegende Erfindung betrifft eine Energieversorgungsschaltung zur Versorgung mehrerer elektrischer Verbraucher, ein elektrisches Antriebssystem mit einer Energieversorgungsschaltung, sowie einen Flugkörper mit einem elektrischen Antriebssystem.

### TECHNISCHER HINTERGRUND

Fluggeräte mit mehreren elektrischen Antrieben sind bekannt. Hierbei können mehrere Rotoren mit jeweils einem separaten elektrischen Antrieb betrieben werden. Die elektrischen Antriebe müssen dabei von einer Gleichspannungsquelle mit Energie gespeist werden.

Die Druckschrift DE 10 2013 000 168 A1 offenbart ein Fluggerät mit mehreren Rotoren. Als Antrieb für die Rotoren können insbesondere Elektromotoren eingesetzt werden. Die Elektromotoren können mittels mitgeführter Batterien mit Energie versorgt werden.

Dokument US 2007/273216 A1 zeigt eine Energieversorgungseinrichtung, bei der mehrere Gleichstromquellen durch eine gemeinsame Verbindungseinrichtung mit mehreren Verbrauchern verbunden sind.

### ZUSAMMENFASSUNG DER ERFINDUNG

Es ist eine Aufgabe der vorliegenden Erfindung, eine Vorrichtung für eine sichere und zuverlässige Energieversorgung für mehrere elektrische Verbraucher bereitzustellen.

Hierzu schafft die vorliegende Erfindung eine Energieversorgungsvorrichtung mit den Merkmalen des Patentanspruchs 1. Weiterhin schafft die vorliegende Erfindung ein elektrisches Antriebssystem mit den Merkmalen des Patentanspruchs 7, sowie einen elektrisch angetriebenen Flugkörper mit den Merkmalen des Patentanspruchs 11.

Demgemäß schafft die vorliegende Erfindung in einem ersten Aspekt eine Energieversorgungsvorrichtung zur Kopplung mehrerer Gleichspannungsquellen mit mehreren elektrischen Verbrauchern. Die Anzahl der Gleichspannungsquellen entspricht hierbei der Anzahl der zu versorgenden elektrischen Verbraucher. Die Energieversorgungsvorrichtung umfasst eine erste Verbindungseinrichtung, eine zweite Verbindungseinrichtung und ein Steuerelement. Die erste Verbindungseinrichtung ist dazu ausgelegt, jeweils einen Ausgang einer Gleichspannungsquelle mit einem Eingang eines elektrischen Verbrauchers direkt elektrisch zu verbinden. Die zweite Verbindungseinrichtung ist dazu ausgelegt, jeweils einen Ausgang einer Gleichspannungsquelle mit einem Eingang eines elektrischen Verbrauchers elektrisch zu verbinden. Hierbei umfasst jede zweite Verbindungseinrichtung eine Serienschaltung aus einem ersten Schaltelement, einer ersten Diode und einer zweiten Diode. Die erste Diode und die zweite Diode sind an einem Knotenpunkt elektrisch miteinander verbunden. Weiterhin sind alle Knotenpunkte der zweiten Verbindungseinrichtungen elektrisch miteinander verbunden. Das Steuerelement ist dazu ausgelegt, die ersten Schaltelemente gemeinsam anzusteuern. Des Weiteren können parallel zu den Dioden weitere elektronische oder mechanische Schaltelemente angeordnet sein.

Gemäß einem zweiten Aspekt schafft die vorliegende Erfindung ein elektrisches Antriebssystem mit einer elektrischen Energieversorgungsvorrichtung des ersten Aspekts, mehreren Gleichspannungsquellen und mehreren elektrischen Verbrauchern. Die Gleichspannungsquellen sind dazu ausgelegt, jeweils eine elektrische Gleichspannung bereitzustellen. Die elektrischen Verbraucher umfassen jeweils eine elektrische Antriebsvorrichtung. Die Anzahl der Gleichspannungsquellen entspricht der Anzahl der elektrischen Verbraucher.

Gemäß einem dritten Aspekt schafft die vorliegende Erfindung einen elektrisch angetriebenen Flugkörper mit einem elektrischen Antriebssystem gemäß dem zweiten Aspekt.

Einer der Vorteile der erfindungsgemäßen Energieversorgungsvorrichtung besteht darin, dass mehrere elektrische Verbraucher von mehreren separaten Gleichspannungsquellen mit elektrischer Energie versorgt werden können. Die Anzahl der Gleichspannungsquellen entspricht dabei der Anzahl der zu speisenden elektrischen Verbraucher. Das heißt, jedem elektrischen Verbraucher ist eine Gleichspannungsquelle zugeordnet. Durch die Verwendung mehrerer einzelner Gleichspannungsquellen sinkt die elektrische Leistung, die in einem Fehlerfall, beispielsweise einem Kurzschluss durch eine der Gleichspannungsquellen eingespeist wird. Die dabei auftretenden Fehlerströme sind hierdurch besser beherrschbar. Daher können die entsprechenden Gleichspannungsquellen in einem Fehlerfall durch bestehende und verfügbare Schutzelemente zuverlässig elektrisch getrennt werden.

Darüber hinaus ermöglicht die erfindungsgemäße Energieversorgungsvorrichtung eine gleichmäßige Belastung aller Gleichspannungsquellen. Alle an die Energieversorgungsvorrichtung angeschlossenen Gleichspannungsquellen werden während des Betriebs gleichmäßig belastet. Auf diese Weise werden beispielsweise Batterien als Gleichspannungsquellen gleichmäßig entladen. Dabei werden die Bauelemente der zweiten Verbindungseinrichtung der Energieversorgungsvorrichtung nur mit eventuell erforderlichen Ausgleichsströmen belastet (Balancing). Ein Hauptanteil der elektrischen Energie von der Gleichspannungsquelle zu dem jeweiligen Verbraucher fließt dagegen über eine direkte elektrische Verbindung. Auf diese Weise kann ein sehr hoher Wirkungsgrad für die Lastverteilung erzielt werden.

Ferner ermöglicht die erfindungsgemäße Energieversorgungsvorrichtung auch in einem Fehlerfall weiterhin eine zuverlässige Energieversorgung. Hierzu können die Einzelsysteme im Fehlerfall sehr einfach separiert werden, so dass ein Einfluss einer fehlerhaften Komponente auf das Gesamtsystem minimiert werden kann.

Die einzelnen Gleichspannungsquelle, wie auch die einzelnen Verbraucher können auch aus einer Untergruppe von kleineren Gleichspannungsquelle oder Verbrauchern bestehen. Im Weiteren wird sowohl eine einzelne Gleichspannungsquelle als auch eine Untergruppe von Gleichspannungsquelle als Gleichspannungsquelle bezeichnet. Ebenso werden auch ein einzelner Verbraucher und eine Untergruppe von Verbrauchern im Folgenden als Verbraucher bezeichnet.

Unter dem Begriff Dioden werden in der vorliegenden Erfindung insbesondere sämtliche Bauelemente verstanden, welche einen unidirektionale Stromfluss ermöglichen, das heißt, das Bauelement ist einem elektrischen Strom in eine vorgegebene Richtung leitend, während es für einen elektrischen Stromfluss in die entgegengesetzte Richtung sperrt.

Vorteilhafte Ausgestaltungen und Weiterbildungen ergeben sich aus den weiteren Unteransprüchen sowie aus der Beschreibung unter Bezugnahme auf die Figuren.

Gemäß einer Ausführungsform umfasst die Energieversorgungsvorrichtung eine Überwachungseinrichtung. Die Überwachungseinrichtung ist dazu ausgelegt, eine Fehlfunktion in einer der Gleichspannungsquellen und/oder in einem der elektrischen Verbraucher zu detektieren. Auch könnte eine Fehlfunktion im Gesamtverbund durch Überwachung der Strangströme detektiert werden. Falls durch die Überwachungseinrichtung eine solche Fehlfunktion detektiert worden ist, werden mittels Steuerelementen die ersten Schaltelemente in den zweiten Verbindungseinrichtungen geöffnet. Auf diese Weise kann in einem Fehlerfall das durch die Energieversorgungsvorrichtung zusammengeschaltete Netzwerk aufgespalten werden. Ein Fehler in einer der Gleichspannungsquellen oder einem der elektrischen Verbraucher wirkt sich somit nicht länger auf die Energieversorgung der übrigen Komponenten aus.

Gemäß einer Ausführungsform umfassen die zweiten Verbindungseinrichtungen der Energieversorgungsvorrichtung jeweils ein zweites Schaltelement, das parallel zu der ersten Diode angeordnet ist und ein drittes Schaltelement, das parallel zu der zweiten Diode angeordnet ist. Mittels dieser Schaltelemente können die jeweiligen Dioden überbrückt werden. Bei den Schaltelementen kann es sich um beliebige Schaltelemente, wie beispielsweise mechanische Schaltelemente oder Halbleiterschaltelemente handeln. Insbesondere sind beispielsweise MOSFET oder bipolare Transistoren mit einem isolierten Gateanschluss (IGBT) möglich. Aber auch beliebige andere geeignete Schaltelemente, wie zum Beispiel Siliziumkarbid (SiC) Halbleiterschalter oder andere Halbleiterschalter sind ebenso möglich. Da die elektrischen Verluste durch ein geschlossenes Schaltelement in der Regel geringer sind, als die elektrischen Verluste eines Stroms, der in Durchlassrichtung durch eine Diode fließt, können durch Ansteuern der Schaltelemente die elektrischen Verluste gesenkt und somit wird der Wirkungsgrad des Systems gesteigert werden.

Gemäß einer Ausführungsform umfasst die Energieversorgungsvorrichtung eine Steuereinrichtung. Die Steuereinrichtung ist dazu ausgelegt, einen elektrischen Strom durch die erste Diode und/oder einen elektrischen Strom durch die zweite Diode zu bestimmen. Falls der elektrische Strom durch eine der ersten Dioden und/oder eine der zweiten Diode einen vorgegebenen Schwellwert überschreitet, so kann die Steuereinrichtung das jeweils parallel zu dieser Diode vorgesehene Schaltelement in einen leitfähigen Zustand schalten. Auf diese Weise können die elektrischen Verluste, die aufgrund eines elektrischen Stroms durch die jeweilige Diode verursacht werden, minimiert werden.

Gemäß einer Ausführungsform ist die Steuereinrichtung dazu ausgelegt, den elektrischen Stromfluss durch die ersten Dioden und/oder den elektrischen Stromfluss durch die zweiten Dioden aus einem Schaltzustand der Gleichspannungsquellen und/oder einem Schaltzustand der elektrischen Verbraucher zu berechnen oder zumindest abzuschätzen. Beispielsweise kann aus einem deaktivierten elektrischen Verbraucher oder einer von der Energieversorgungsvorrichtung getrennten Gleichspannungsquelle auf einen möglichen Ausgleichsstrom in der Energieversorgungsvorrichtung geschlossen werden. Entsprechend einem solchen zu erwartenden elektrischen Ausgleichsstrom können die Schaltelemente parallel zu den jeweiligen Dioden angesteuert werden, um die elektrischen Verluste zu minimieren.

Gemäß einer Ausführungsform ist die Steuereinrichtung dazu ausgelegt, den elektrischen Stromfluss durch die ersten Dioden und/oder den elektrischen Stromfluss durch die zweiten Dioden basierend auf sensorisch erfassten Messwerten in den Gleichspannungsquellen und/oder den elektrischen Verbrauchern zu ermitteln. Insbesondere wenn bereits entsprechende Stromsensoren in den Gleichspannungsquellen oder den elektrischen Verbrauchern vorgesehen sind, können diese Messwerte der Sensoren verwendet werden, um hieraus auf einen möglichen Ausgleichsstrom in der Energieversorgungsvorrichtung zu schließen. Basierend auf einem solchen Ausgleichsstrom können die jeweiligen Schaltelemente, welche parallel zu den Dioden vorgesehen sind, angesteuert werden, um die elektrischen Verluste zu minimieren.

Gemäß einer Ausführungsform des elektrischen Antriebssystems umfassen die Gleichspannungsquellen eine Trenneinrichtung. Diese Trenneinrichtung ist dazu ausgelegt, eine elektrische Verbindung zwischen der Gleichspannungsquelle und der Energieversorgungsvorrichtung zu unterbrechen. Bei der Trenneinrichtung kann es sich beispielsweise um einen Batterieschutzschalter, eine Überstromschutzvorrichtung oder ähnliches handeln. Da für jede Gleichspannungsquelle eine separate Trenneinrichtung vorgesehen ist, müssen durch die jeweiligen Trenneinrichtungen nur die im Fehlerfall zu erwartenden Fehlerströme einer Gleichspannungsquelle beherrscht werden.

Gemäß einer Ausführungsform umfassen die Gleichspannungsquellen jeweils einen elektrischen Energiespeicher, insbesondere eine Batterie.

Gemäß einer Ausführungsform ist eine Speicherkapazität des elektrischen Energiespeichers jeweils an eine zu erwartende Energieaufnahme eines korrespondierenden elektrischen Verbrauchers angepasst. Auf diese Weise werden die einzelnen Energiespeicher möglichst gleichmäßig entladen, so dass nur relativ geringe Ausgleichsströme zu erwarten sind. Folglich sinken auch die elektrischen Verluste aufgrund der Ausgleichsströme innerhalb der Energieversorgungsvorrichtung.

Die obigen Ausgestaltungen und Weiterbildungen lassen sich, soweit sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu den jeweiligen Grundformen der vorliegenden Erfindung hinzufügen.

### KURZE INHALTSANGABE DER FIGUREN

Die vorliegende Erfindung wird nachfolgend anhand der in den schematischen Figuren angegebenen Ausführungsbeispiele näher erläutert. Dabei zeigen:
- Figur 1:: eine schematische Darstellung eines elektrischen Antriebssystems mit einer Energieversorgungsvorrichtung gemäß einer Ausführungsform;
- Figur 2:: eine schematische Darstellung eines elektrischen Antriebssystems mit einer Energieversorgungsvorrichtung gemäß einer weiteren Ausführungsform;
- Figur 3:: eine schematische Darstellung eines elektrischen Antriebssystems mit einer Energieversorgungsvorrichtung gemäß noch einer weiteren Ausführungsform; und
- Figur 4:: eine schematische Darstellung eines Flugkörpers mit einem elektrischen Antriebssystem gemäß einer Ausführungsform.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

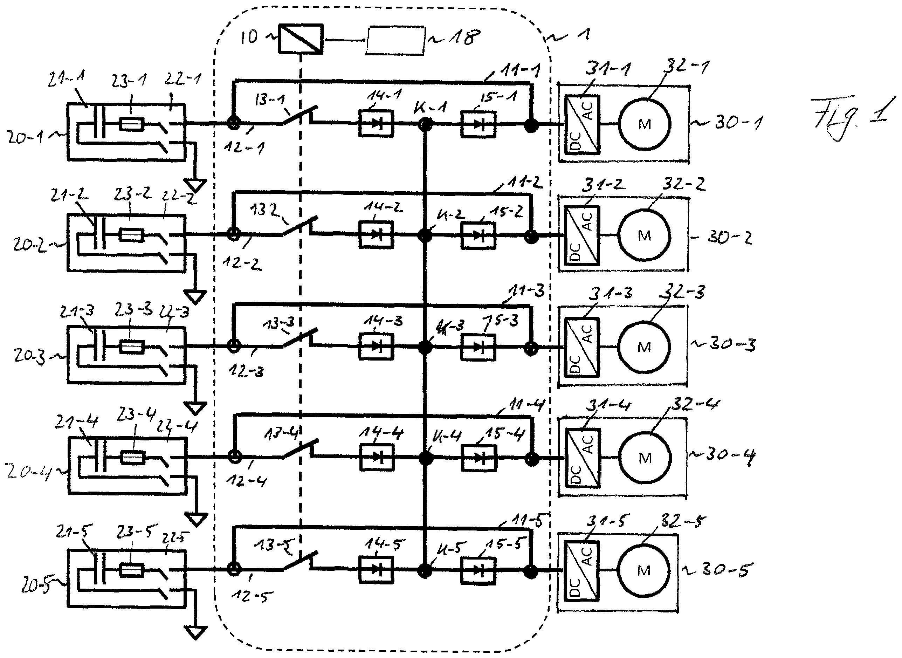

Figur 1 zeigt eine schematische Darstellung eines elektrischen Antriebssystems mit einer Energieversorgungsvorrichtung 1 gemäß einer Ausführungsform. Das elektrische Antriebssystem umfasst mehrere elektrische Antriebseinheiten 30-1. In der hier dargestellten Ausführungsform umfassen die Antriebseinheiten 30-i jeweils einen elektrischen Stromrichter 31-i, beispielsweise einen ein- oder mehrphasigen Wechselrichter. Dieser Stromrichter 31-i kann einen Elektromotor 32-i speisen. Darüber hinaus sind jedoch auch beliebige alternative elektrische Antriebseinheiten 30-i möglich. Die hier dargestellte Anzahl von fünf elektrischen Antriebseinheiten 30-1 bis 30-5 dient nur dem Verständnis und stellt keine Beschränkung der vorliegenden Erfindung dar. Darüber hinaus ist auch eine beliebige andere Anzahl von elektrischen Antriebseinheiten 30-i möglich. Beispielsweise kann das elektrische Antriebssystem auch nur zwei, drei, vier oder auch sechs und mehr elektrische Antriebseinheiten 30-i umfassen.

Die elektrischen Antriebseinheiten 30-i sind im Folgenden jeweils als Einheiten mit nur einem Stromrichter 31-i und nur einem Elektromotor 32-i dargestellt und beschrieben. Dies gilt jedoch nur dem einfacheren Verständnis und stellt keine Beschränkung der vorliegenden Erfindung dar. Darüber hinaus sind ebenso Antriebseinheiten 30-i mit mehreren Stromrichter 31-i und/oder mehreren Elektromotoren 32-I möglich. Insbesondere können eine oder mehrere der hier angeführten Antriebseinheiten 30-i auch mehrere Untergruppen aus Antriebseinheiten mit individuellen Stromrichter und Elektromotoren umfassen.

Ferner umfasst das elektrische Antriebssystem mehrere Gleichspannungsquellen 20-i. Dabei entspricht die Anzahl der Gleichspannungsquellen 20-i der Anzahl der elektrischen Antriebseinheiten 30-i. Das heißt, es sind genauso viele Gleichspannungsquellen 20-i vorgesehen, wie elektrische Antriebseinheiten 30-i vorhanden sind. Jeder elektrischen Antriebseinheit 30-i ist eine Gleichspannungsquelle 20-i zugeordnet.

Die einzelnen Gleichspannungsquelle 20-i sind hier zum besseren Verständnis als Einheiten mit jeweils einer Gleichspannungsquelle dargestellt. Dies war jedoch keine Beschränkung der vorliegenden Erfindung darstellen. Vielmehr sind als Gleichspannungsquelle 20-i auch Gleichspannungsquelle mit mehreren Untergruppen aus parallel und/oder in Serie geschalteten Gleichspannungsquelle möglich. Im nachfolgenden noch näher erläutert wird, müssen die einzelnen Gleichspannungsquelle 20-i nicht identisch aufgebaut sein. Vielmehr ist es ausreicht, wenn alle Gleichspannungsquelle 20-i eine zumindest annähernd gleiche Ausgangsspannung liefern. Die Leistungsfähigkeit der einzelnen Gleichspannungsquellen 20-i ist hierbei vorzugsweise, wie im nachfolgenden noch erläutert wird, auf die der jeweiligen Gleichspannungswandler 20-i zugeordnete Antriebseinheiten 30-i angepasst.

Bei den Gleichspannungsquellen 20-i kann es sich beispielsweise um elektrische Energiespeicher handeln. Insbesondere können die Gleichspannungsquellen 20-i eine Batterie 21-i, wie zum Beispiel einen wiederaufladbaren Akkumulator umfassen. Jede der Gleichspannungsquellen 20-i kann darüber hinaus einen Trennschalter 22-i umfassen. Dieser Trennschalter 22-i kann beispielsweise eine elektrische Verbindung zwischen dem elektrischen Energiespeicher 21-i und einem Anschluss der mit der Gleichspannungsquelle 20-i gekoppelten Energieversorgungsvorrichtung 1 verbinden oder trennen. Beispielsweise kann es sich bei dieser Trennvorrichtung 22-i um einen Batterieschutzschalter oder eine andere geeignete Trennvorrichtung handeln. Darüber hinaus kann die Gleichspannungsquelle 20-i weitere Komponenten, wie zum Beispiel eine Überstromschutzvorrichtung 23-i umfassen. Eine solche Überstromschutzvorrichtung 23-i kann beispielsweise eine elektrische Verbindung zwischen dem elektrischen Energiespeicher 21-i und einem Anschluss des mit der Gleichspannungsquelle 20-i gekoppelten Energieversorgungsvorrichtung 1 unterbrechen, wenn ein elektrischer Strom aus der Gleichspannungsquelle 20-i einen vorgegebenen Grenzwert überschreitet.

Wie in Figur 1 zu erkennen ist, ist jede Gleichspannungsquelle 20-i einer entsprechenden elektrischen Antriebseinheit 30-i zugeordnet. Dabei kann insbesondere die jeweilige Gleichspannungsquelle 20-i entsprechend einer zu erwartenden Leistungsaufnahme der korrespondierenden Antriebseinheit 30-i dimensioniert werden. Beispielsweise kann eine Speicherkapazität eines elektrischen Energiespeichers 21-i in einer Gleichspannungsquelle 20-i entsprechend der zu erwartenden Leistungsaufnahme der korrespondierenden Antriebseinheit 30-i angepasst sein. Für elektrische Antriebseinheiten 30-i mit einer hohen Leistungsaufnahme kann entsprechend ein Energiespeicher 21-i mit einer hohen Speicherkapazität vorgesehen werden, während für Antriebseinheiten 30-i mit einer geringeren Leistungsaufnahme auch eine geringere Speicherkapazität vorgesehen sein kann. Darüber hinaus können gegebenenfalls zusätzlich oder alternativ auch weitere Parameter bzw. Kenngrößen der Gleichspannungsquelle 20-i basierend auf Kenngrößen der zugeordneten Antriebseinheiten 30-i angepasst oder dimensioniert werden. Dies hat zur Folge, dass die jeweiligen Gleichspannungsquellen 20-i von den jeweils zugeordneten Antriebseinheiten 30-i zumindest annähernd gleichmäßig belastet werden. Daher sind in einem Regelbetrieb keine oder nur geringe Ausgleichsströme zwischen den einzelnen Energieversorgungszweigen zu erwarten. Diese eventuell auftretenden Ausgleichsvorgänge werden im Nachfolgenden noch näher erläutert.

Bei der Auslegung des elektrischen Antriebssystems ist darüber hinaus darauf zu achten, dass von allen Gleichspannungsquellen 20-i eine zumindest annähernd gleiche Gleichspannung bereitgestellt werden kann. Entsprechend müssen auch die einzelnen Antriebseinheiten 30-i mit zumindest annähernd gleichen Gleichspannungen versorgt werden können.

Zwischen den Gleichspannungsquellen 20-i und den Antriebseinheiten 30-i ist eine elektrische Energieversorgungsvorrichtung 1 in Form eines elektrischen Netzwerkes vorgesehen. Die Energieversorgungsvorrichtung 1 umfasst für jedes Paar aus Gleichspannungsquelle 20-i und Antriebseinheit 30-i jeweils eine erste Verbindungseinrichtung 11-i und eine zweite Verbindungseinrichtung 12-i. Die erste Verbindungseinrichtung 11-i stellt hierbei eine direkte elektrische Verbindung zwischen einem Ausgang einer Gleichspannungsquelle 20-i und einem Eingang der korrespondierenden elektrischen Antriebseinheit 30-i bereit. Dies kann beispielsweise durch eine Kabelverbindung oder eine beliebige anders ausgebildete elektrische Verbindung realisiert werden.

Parallel zu der ersten Verbindungseinrichtung 11-i ist zwischen dem Ausgang einer Gleichspannungsquelle 20-i und einem Eingang der zugeordneten elektrischen Antriebseinheit 30-i eine zweite Verbindungseinrichtung vorgesehen. Diese zweite Verbindungseinrichtung 12-i umfasst zwischen dem Ausgang der Gleichspannungsquelle 20-i und dem Eingang der entsprechenden elektrischen Antriebseinheit 30-i jeweils eine Serienschaltung aus einem Schaltelement 13-i, einer ersten Diode 14-i und einer zweiten Diode 15-i. Bei den beiden Dioden 14-i und 15-i kann es sich um beliebige, geeignete Dioden handeln, die dazu geeignet sind, die nachfolgend noch näher erläuterten Ausgleichsströme zu tragen. Ferner sind am Start der hier beschriebenen Dioden auch beliebige weitere Bauelemente möglich, welche einen elektrischen Stromfluss in eine Richtung gestatten und in eine entgegengesetzte Richtung blockieren. Die erste Diode 14-i und die zweite 15-i sind an einem Knotenpunkt K-i elektrisch miteinander verbunden. Entsprechend wird in jeder zweiten Verbindungseinrichtung 12-i zwischen einer Gleichspannungsquelle 20-i und einer zugeordneten Antriebseinheit 30-i jeweils ein solcher Knotenpunkt K-i gebildet. Alle diese Knotenpunkte K-i in den zweiten Verbindungseinrichtungen 12-i sind elektrisch miteinander verbunden.

Weiterhin sind die Schaltelemente 13-i in den zweiten Verbindungseinrichtungen 12-i derart miteinander gekoppelt, dass alle Schaltelemente 13-i gemeinsam geöffnet oder geschlossen werden können. Hierzu kann ein Steuerelement 10 vorgesehen, dass alle Schaltelemente 13-i in den zweiten Verbindungseinrichtungen gemeinsam ansteuert. Beispielsweise kann dies durch ein mehrpoliges Relais oder einen mehrpoligen Schütz oder ähnliches realisiert werden. Darüber hinaus sind auch beliebige weitere Schaltelemente, insbesondere auch Schaltelemente auf Basis von Halbleiterschaltern, wie zum Beispiel MOSFET oder IGBT möglich.

Während eines normalen Betriebsmodus sind die Schaltelemente 13-i in den zweiten Verbindungseinrichtungen 12-i geschlossen. Beispielsweise können die Schaltelemente 13-i mittels dem Steuerelement 10 entsprechend angesteuert werden. Somit ist jede Gleichspannungsquelle 20-i mit der korrespondierenden elektrischen Antriebseinheit 30-i sowohl über die erste Verbindungseinrichtung 11-i, als auch über die zweite Verbindungseinrichtung 12-i verbunden. Die Gleichspannungsquellen 20-i können somit die zugeordneten Antriebseinheiten 30-i mit elektrischer Energie versorgen. Sind dabei die Gleichspannungsquellen 20-i optimal an die Leistungsaufnahme der korrespondierenden Antriebseinheiten 30-i angepasst, so wird der elektrische Strom vorzugsweise über die ersten Verbindungseinrichtungen 11-i fließen. Hierbei sind die auftretenden elektrischen Verluste aufgrund der direkten elektrischen Verbindung besonders gering.

Gegebenenfalls kann es zum Beispiel aufgrund eines Ungleichgewichts in dem Energieverbrauch der Antriebseinheiten 30- i dazu kommen, dass von einer oder mehreren elektrischen Antriebseinheiten 30-i mehr elektrische Energie aufgenommen wird, als von der zugeordneten Gleichspannungsquelle 20-i bereitgestellt wird. In diesem Fall wird ein elektrischer Strom von einer weiteren Gleichspannungsquelle 20-i über das Schaltelement 13-i, und die erste Diode 14-i über den Knotenpunkt K-i in den Zweig fließen, in dem sich die Antriebseinheit 30-i mit der höheren Leistungsaufnahme befindet. Weiter wird der Strom über die zweite Diode 14-i in diesem Zweig zu der entsprechenden Antriebseinheit 30-i fließen. Auf diese Weise ist es während des Betriebs möglich, dass ein Austausch von elektrischer Energie zwischen den einzelnen Zweigen des Antriebssystems erfolgt. Da in diesem Fall jedoch nur die zusätzlichen Ausgleichsströme über das Schaltelement 13-i und die beteiligten Dioden 14-i und 15-i fließen, sind die über diesem Bauelementen auftretenden elektrischen Verluste relativ gering. Daher kann in diesem Betriebsmodus ein sehr hoher Wirkungsgrad mit geringen elektrischen Verlusten erreicht werden.

Das elektrische Antriebssystem und insbesondere die einzelnen elektrischen Antriebseinheiten 30-i, sowie die Gleichspannungsquellen 20-i können während des Betriebs von einer Überwachungseinrichtung 18 überwacht werden. Tritt in dem elektrischen Antriebssystem ein Fehler auf, so kann dieser Fehler von der Überwachungseinrichtung 18 detektiert werden.

Nachdem ein Fehler in dem Antriebssystem detektiert worden ist, können die Schaltelemente 13-i in den zweiten Verbindungseinrichtungen 12-i geöffnet werden. Hierdurch werden die einzelnen Zweige voneinander entkoppelt, und jede Gleichspannungsquelle 20-i speist daraufhin nur noch über die direkte erste Verbindungseinrichtung 11-i die korrespondierende Antriebseinheit 30-i. Auf diese Weise kann gewährleistet werden, dass sich ein Fehler in einem Zweig des Antriebssystems nicht auf die weiteren Zweige des Antriebssystems auswirkt. Die fehlerfreien Zweige können daraufhin störungsfrei weiter betrieben werden. Lediglich eine Symmetrisierung, das heißt ein Energieausgleich zwischen den einzelnen Zweigen ist daraufhin nicht mehr möglich.

In dem fehlerbehafteten Zweig kann nach Öffnen der Schaltelemente 13-i in den zweiten Verbindungseinrichtungen 12-i die elektrische Verbindung zwischen der Gleichspannungsquelle 20-i und der Energieversorgungsschaltung 1 mittels dem Trennschalter 22-i der jeweiligen Gleichspannungsquelle 20-i unterbrochen werden. Der Trennschalter 22-i muss dabei lediglich auf den zu erwartenden Fehlerstrom dieser einzelnen Gleichspannungsquelle 20-i ausgelegt sein. Beispielsweise kann dieser Fehlerstrom einem zu erwartenden Kurzschlussstrom der Gleichspannungsquelle 20-i entsprechen.

Liegt ein Fehler in der elektrisch getrennten Gleichspannungsquelle 20-i vor, die von der Energieversorgungsvorrichtung 1 getrennt worden ist, so kann nach dem Öffnen des Trennschalters 22-i das Steuerelement 10 die Schaltelemente 13-i in den zweiten Verbindungseinrichtungen 12-i wieder schließen. Daraufhin kann die noch mit der Energieversorgungsvorrichtung 1 verbundenen Gleichspannungsquellen 20-i über die Knotenpunkte K-i auch diejenige Antriebseinheit 30-i mit elektrischer Energie versorgen, deren Gleichspannungsquelle 20-i nun von der Energieversorgungsschaltung 1 getrennt ist.

Liegt alternativ ein Fehler in einer Antriebseinheit 30-i vor, so kann gegebenenfalls über einen weiteren Trennschalter in den Antriebseinheiten 30-i (hier nicht dargestellt) die jeweilige Antriebseinheit 30-i von der Energieversorgungsschaltung 1 getrennt werden. Auch daraufhin können die Schaltelemente 13-i wieder geschlossen werden, so dass auch die der fehlerhaften Antriebseinheit 30-i zugeordnete Gleichspannungsquelle 20-i weiterhin elektrische Energie in die Energieversorgungsschaltung 1 einspeisen kann. Diese zusätzlich eingespeiste elektrische Energie kann über die Knotenpunkte K-i auch an den weiterhin angeschlossenen Antriebseinheiten 30-i bereitgestellt werden.

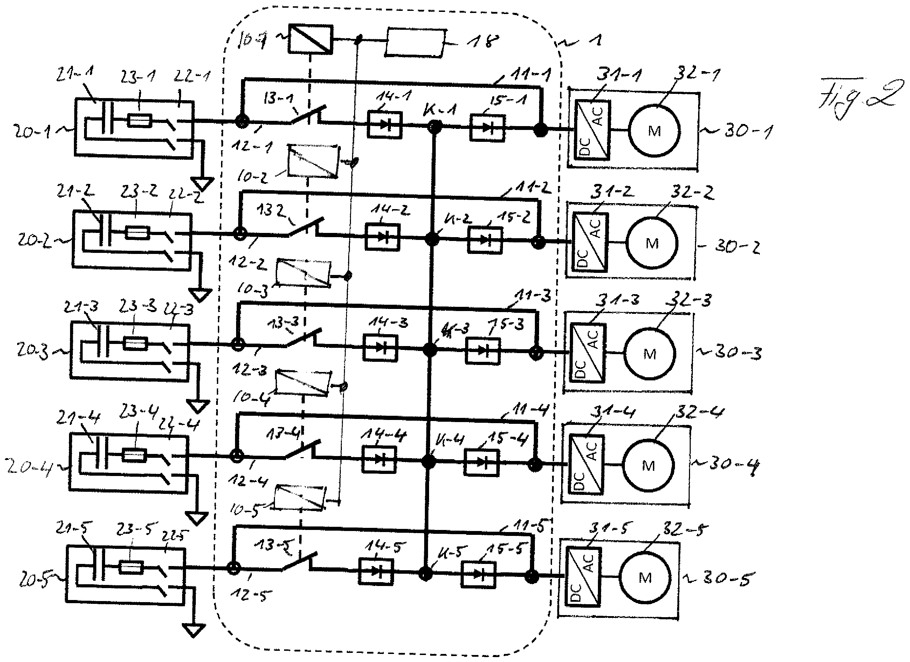

Figur 2 zeigt eine schematische Darstellung eines elektrischen Antriebssystems mit einer Energieversorgungsschaltung 1 gemäß einer weiteren Ausführungsform. Die hier dargestellte Ausführungsform entspricht im Wesentlichen der zuvor beschriebenen Ausführungsform, wobei die Schaltelemente 13-i jeweils einzeln mittels separater Steuerelemente 10-i angesteuerte werden können. Auf diese Weise kann jedes Schaltelement 13-i individuell geöffnet oder geschlossen werden.

Die Überwachungseinrichtung 18 kann hierbei für jedes Schaltelement 13-i einen individuellen Schaltzustand festlegen. Basierend auf diesen festgelegten Schaltzuständen können durch die einzelnen Steuerelemente 10-i die jeweiligen Schaltelemente 13-i einzeln geöffnet oder geschlossen werden.

Im einem normalen, fehlerfreien Betriebszustand werden, wie auch in dem zuvor beschriebenen Beispiel alle Schaltelemente 13-i durch die jeweiligen Steuerelemente 10-i geschlossen. Nach Auftreten eines Fehlers und einer entsprechenden Detektion des Fehlers durch die Überwachungseinrichtung 18 kann die Überwachungseinrichtung 18 hierauf eine Konfiguration für die Energieversorgungsvorrichtung 1 ermitteln, in der die fehlerhafte Komponente von den anderen Komponenten isoliert wird. Hierzu können beispielsweise eine fehlerhafte Gleichspannungsquelle 20-i und/oder ein fehlerhafter Verbraucher 30-i von der Energieversorgungsvorrichtung 1 getrennt werden.

Gegebenenfalls kann zusätzlich oder alternativ auf durch entsprechendes individuelles Öffnen und Schließen der Schaltelemente 13-i in der Energieversorgungsvorrichtung 1 ein Schaltzustand eingestellt werden, in dem fehlerhafte Komponenten, die gegebenenfalls durch die Überwachungseinrichtung 18 detektiert worden sind, von den intakten Komponenten isoliert werden. Bei den fehlerhaften Komponenten kann es sich beispielsweise um angeschlossene Gleichspannungsquellen 20-i oder angeschlossene Verbraucher 30-i handeln. Darüber hinaus ist es auch möglich, dass durch die Überwachungseinrichtung 18 auch Fehler innerhalb der Energieversorgungsvorrichtung 1 detektiert werden und anschließend eine entsprechende Konfiguration der Energieversorgungsvorrichtung 1 erfolgt.

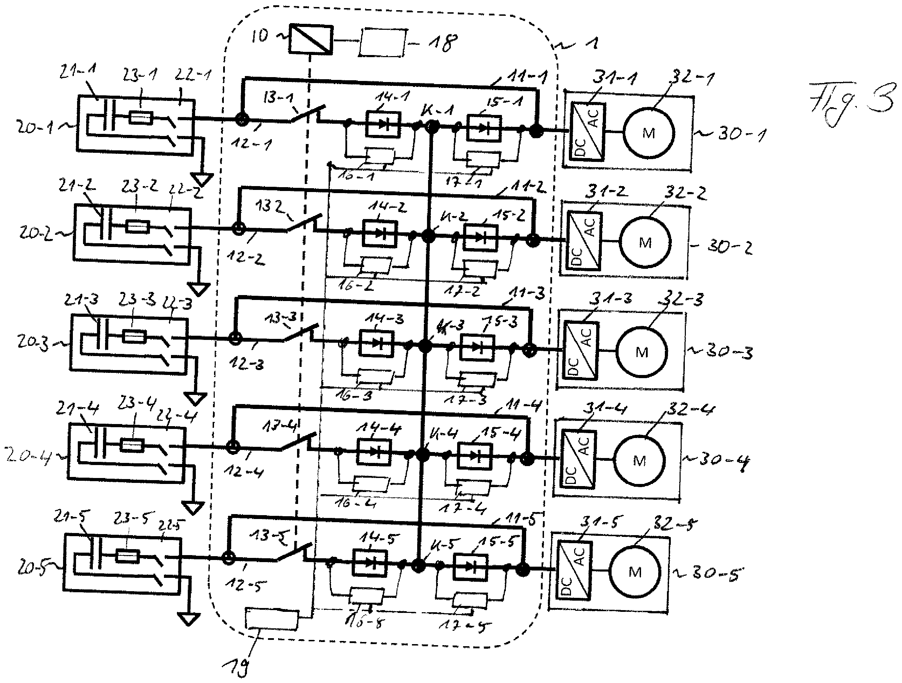

Figur 3 zeigt eine schematische Darstellung eines elektrischen Antriebssystems mit einer Energieversorgungsschaltung 1 gemäß einer weiteren Ausführungsform. Die hier dargestellte Ausführungsform entspricht im Wesentlichen den zuvor beschriebenen Ausführungsformen und ist in geeigneter Weise mit den zuvor beschriebenen Ausführungsformen beliebig kombinierbar. In dieser Ausführungsform sind parallel zu den ersten Dioden 14-i und 15-i jeweils zusätzliche Schaltelemente 16-i und 17-i vorgesehen. Bei diesen Schaltelementen 16-i und 17-i kann es sich um beliebige Schaltelemente handeln, die dazu ausgelegt sind, die erforderlichen elektrischen Ausgleichsströme zu tragen. Beispielsweise kann es sich bei den Schaltelementen 16-i und 17-i um mechanische Schaltelemente, wie zum Beispiel ein Schütz oder ähnliches handeln. Darüber hinaus sind auch Schaltelemente auf Basis von Halbleiterschaltern, wie zum Beispiel IGBT oder MOSFET möglich. Diese Schaltelemente 16-i und 17-i können beispielsweise von einer Steuereinrichtung 19 einzeln angesteuert werden. Solange die jeweiligen Schaltelemente 16-i und 17-i geöffnet sind, fließt ein eventuell auftretender elektrischer Ausgleichsstrom durch die jeweiligen Dioden 14-i und 15-i. Um die eventuell hierbei auftretenden elektrischen Verluste zu minimieren, können beim Auftreten eines solchen Ausgleichsstroms die Schaltelemente 16-i und/oder 17-i an den entsprechenden Dioden 14-i und 15-i geschlossen werden. Auf diese Weise werden die entsprechenden Dioden 14-i und 15-i überbrückt. Daraufhin wird ein elektrischer Strom vorzugsweise durch die geschlossenen Schaltelemente 16-i und 17-i fließen. Aufgrund der geringeren elektrischen Verluste in solchen geschlossenen Schaltelementen 16-i und 17-i kann die Verlustleistung, welche ansonsten in den Dioden 14-i und 15-i umgesetzt wird, in der Energieversorgungsschaltung 1 verringert werden, wodurch der Wirkungsgrad des Systems gesteigert werden kann. Die Steuereinrichtung 19 kann hierbei basierend auf sensorisch erfassten Messwerten, wie zum Beispiel gemessenen elektrischen Strömen und/oder Informationen über Schaltzustände in den Gleichspannungsquellen 20-i oder den Antriebseinheiten 30-i jeweils ermitteln, an welchen Dioden 14-i und 15-i ein elektrischer Ausgleichsstrom zu erwarten ist. Daraufhin kann die Steuereinrichtung 19 die entsprechenden Schaltelemente 16-i und 17-i an denjenigen Dioden schließen, durch welche ein elektrischer Strom fließt.

Obwohl die vorliegende Erfindung im Voraufgegangenen am Beispiel eines elektrischen Antriebssystems beschrieben worden ist, ist die vorliegende Erfindung nicht darauf beschränkt. Vielmehr kann die Energieversorgungsvorrichtung 1 auch zur Energieversorgung von beliebigen weiteren elektrischen Verbrauchern eingesetzt werden. Beispielsweise ist es auch möglich, die beschriebene Energieversorgungsvorrichtung zur Energieversorgung von Kraftstoffpumpen oder weiteren elektrischen Verbrauchern einzusetzen.

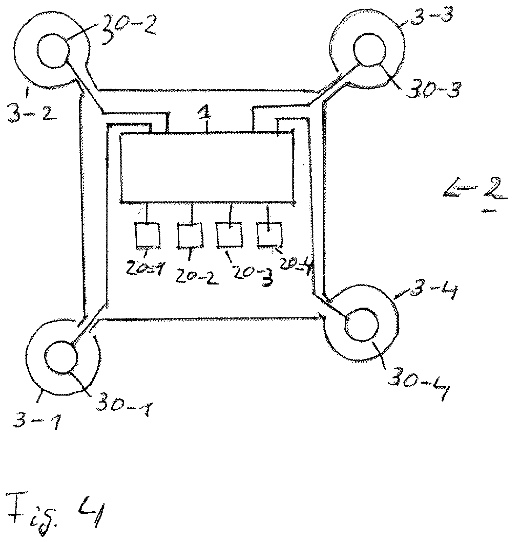

Figur 4 zeigt eine schematische Darstellung eines elektrisch angetriebenen Flugkörpers 2 mit einem elektrischen Antriebssystem gemäß einer Ausführungsform. In dem hier dargestellten Ausführungsbeispiel umfasst der Flugkörper 2 vier Rotoren 3-i, welche jeweils von einer Antriebseinheit 30-i angetrieben werden. Die einzelnen Antriebseinheiten 30-i werden über eine zuvor beschriebene Energieversorgungsvorrichtung 1 mit elektrischer Energie von den elektrischen Energiespeichern 20-i gespeist.

Zusammenfassend betrifft die vorliegende Erfindung eine Energieversorgungsvorrichtung für eine zuverlässige Energieversorgung mehrerer elektrischer Verbraucher, wobei die Energieversorgung von mehreren Gleichspannungsquellen bereitgestellt wird. Die Anzahl der Gleichspannungsquellen entspricht der Anzahl der elektrischen Verbraucher. Die Energieversorgungsvorrichtung umfasst ein deaktivierbares Symmetrisierungsnetzwerk. Hierbei werden lediglich die Ausgleichsströme über das Symmetrisierungsnetzwerk geführt, während die Energieversorgung vorzugsweise über eine direkte elektrische Verbindung zwischen Gleichspannungsquelle und Verbraucher stattfindet. Beim Auftreten eines Fehlers kann das Symmetrisierungsnetzwerk deaktiviert werden. Somit wirken sich Fehler in einem Zweig nicht auf die Zuverlässigkeit der Energieversorgung in den übrigen Zweigen aus.

Nach dem eine fehlerhafte Komponente lokalisiert und isoliert wurde, können die noch intakten Quellen sowie die intakten Verbraucher durch eine geeignete Konfiguration des Symmetrierungsnetzwerkes wieder in Betrieb genommen werden. Auf diese Weise kann die Verfügbarkeit des Antriebssystems gesteigert werden.

## Patentansprüche

1. Energieversorgungsvorrichtung (1), zur Kopplung mehrerer Gleichspannungsquellen (20-i) mit mehreren elektrischen Verbrauchern (30-i), wobei die Anzahl der Gleichspannungsquellen (20-i) der Anzahl der Verbraucher (30-i) entspricht, mit:
ersten Verbindungseinrichtungen (11-i), die dazu ausgelegt sind, jeweils einen Ausgang einer Gleichspannungsquelle (20-i) mit einem Eingang eines elektrischen Verbrauchers (30-i) direkt elektrisch zu verbinden;
zweiten Verbindungseinrichtungen (12-i), die dazu ausgelegt sind, jeweils einen Ausgang einer Gleichspannungsquelle (20-i) mit einem Eingang eines elektrischen Verbrauchers (30-i) elektrisch zu verbinden, wobei jede zweite Verbindungseinrichtung (12-i) eine Serienschaltung aus einem ersten Schaltelement (13-i), einer ersten Diode (14-i) und einer zweiten Diode (15-i) umfasst und erste Diode (14-i) und die zweite Diode (15-i) an einem Knotenpunkt (K-i) elektrisch miteinander verbunden sind, und wobei alle Knotenpunkte (K-i) elektrisch miteinander verbunden sind; und
einem Steuerelement (10, 10-i), das dazu ausgelegt ist, die ersten Schaltelemente (13-i) gemeinsam anzusteuern.

2. Energieversorgungsvorrichtung (1) nach Anspruch 1, mit einer Überwachungseinrichtung (18), die dazu ausgelegt ist, eine Fehlfunktion in einer der Gleichspannungsquellen (20-i) und/oder in einem der elektrischen Verbraucher (30-i) zu detektieren, wobei das Steuerelement (10, 10-i) dazu ausgelegt ist, die ersten Schaltelemente (12-i) zu öffnen, falls die Überwachungseinrichtung (18) eine Fehlfunktion detektiert hat.

3. Energieversorgungsvorrichtung (1) nach Anspruch 1 oder 2, wobei die zweiten Verbindungseinrichtungen (12-i) jeweils ein zweites Schaltelement (16-i) umfassen, das parallel zu der ersten Diode (14-i) angeordnet ist, und ein drittes Schaltelemente (17-i) umfassen, das parallel zu der zweiten Diode (15-i) angeordnet ist.

4. Energieversorgungsvorrichtung (1) Anspruch 3, mit einer Steuereinrichtung (19), die dazu ausgelegt ist, einen elektrischen Strom durch eine erste Diode (14-i) und/oder einen elektrischen Strom durch eine zweite Diode (15-i) zu bestimmen, und das jeweilige zweite Schaltelement (16-i) und/oder das jeweilige dritte Schaltelement (17-i) anzusteuern, falls der elektrische Strom durch die entsprechende erste Diode (14-i) und/oder die zweite Diode (15-i) einen vorgegebenen Schwellwert überschreitet.

5. Energieversorgungsvorrichtung (1) nach Anspruch 4, wobei die Steuereinrichtung (19) dazu ausgelegt ist, den elektrischen Stromfluss durch die ersten Dioden (14-i) und/oder die zweiten Dioden (15-i) aus einem Schaltzustand der Gleichspannungsquellen (20-i) und/oder einem Schaltzustand der elektrischen Verbraucher (30-i) zu berechnen.

6. Energieversorgungsvorrichtung (1) nach Anspruch 4 oder 5, wobei die Steuereinrichtung (19) dazu ausgelegt ist, den elektrischen Stromfluss durch die ersten Dioden (14-i) und/oder die zweiten Dioden (15-i) basierend auf sensorisch erfassten Messwerte in den Gleichspannungsquellen (20-i) und/oder den elektrischen Verbraucher (30-i) zu ermitteln.

7. Elektrisches Antriebssystem, mit:
einer elektrischen Energieversorgungsvorrichtung (1) nach einem der Ansprüche 1 bis 6;
mehreren Gleichspannungsquellen (20-i), die dazu ausgelegt sind, jeweils eine elektrische Gleichspannung bereitzustellen; und
mehreren elektrischen Verbrauchern (30-i), die jeweils eine elektrische Antriebsvorrichtung umfassen.

8. Elektrisches Antriebssystem nach Anspruch 7, wobei die Gleichspannungsquellen (20-i) jeweils eine Trenneinrichtung (22-i) umfassen, die dazu ausgelegt ist, eine elektrische Verbindung zwischen der Gleichspannungsquelle (20-i) und der Energieversorgungsvorrichtung (1) zu unterbrechen.

9. Elektrisches Antriebssystem nach Anspruch 7 oder 8, wobei die Gleichspannungsquelle (20-i) jeweils einen elektrischen Energiespeicher (21-i) umfassen.

10. Elektrisches Antriebssystem nach Anspruch 9, wobei eine Speicherkapazität des elektrischen Energiespeichers (21-i) jeweils an eine zu erwartende Leistungsaufnahme des korrespondierenden elektrischen Verbrauchers (30-i) angepasst ist.

11. Elektrisch angetriebener Flugkörper, mit einem elektrischen Antriebssystem nach einem der Ansprüche 7 bis 10.

## Claims

1. Power supply apparatus (1), for coupling multiple DC voltage sources (20-i) to multiple electrical loads (30-i), the number of DC voltage sources (20-i) being consistent with the number of loads (30-i), having:
first connecting devices (11-i) designed to directly electrically connect a respective output of a DC voltage source (20-i) to an input of an electrical load (30-i);
second connecting devices (12-i) designed to electrically connect a respective output of a DC voltage source (20-i) to an input of an electrical load (30-i), wherein each second connecting device (12-i) comprises a series connection comprising a first switching element (13-i), a first diode (14-i) and a second diode (15-i) and the first diode (14-i) and the second diode (15-i) are electrically connected to one another at a node (K-i), and wherein all the nodes (K-i) are electrically connected to one another; and
a control element (10, 10-i) designed to actuate the first switching elements (13-i) together.

2. Power supply apparatus (1) according to Claim 1, having a monitoring device (18) designed to detect a malfunction in one of the DC voltage sources (20-i) and/or in one of the electrical loads (30-i), the control element (10, 10-i) being designed to open the first switching elements (12-i) if the monitoring device (18) has detected a malfunction.

3. Power supply apparatus (1) according to Claim 1 or 2, wherein the second connecting devices (12-i) comprise a respective second switching element (16-i) arranged in parallel with the first diode (14-i), and comprise a third switching element (17-i) arranged in parallel with the second diode (15-i) .

4. Power supply apparatus (1) according to Claim 3, having a control device (19) designed to determine an electrical current through a first diode (14-i) and/or an electrical current through a second diode (15-i), and to actuate the respective second switching element (16-i) and/or the respective third switching element (17-i) if the electrical current through the applicable first diode (14-i) and/or the second diode (15-i) exceeds a prescribed threshold value.

5. Power supply apparatus (1) according to Claim 4, wherein the control device (19) is designed to calculate the electrical flow of current through the first diodes (14-i) and/or the second diodes (15-i) form a switching state of the DC voltage sources (20-i) and/or a switching state of the electrical loads (30-i).

6. Power supply apparatus (1) according to Claim 4 or 5, wherein the control device (19) is designed to ascertain the electrical flow of current through the first diodes (14-i) and/or the second diodes (15-i) on the basis of sensor-captured measured values in the DC voltage sources (20-i) and/or the electrical loads (30-i).

7. Electrical drive system, having:
an electrical power supply apparatus (1) according to one of Claims 1 to 6;
multiple DC voltage sources (20-i) designed to provide a respective DC voltage; and
multiple electrical loads (30-i) comprising a respective electrical drive apparatus.

8. Electrical drive system according to Claim 7, wherein the DC voltage sources (20-i) comprise a respective isolating device (22-i) designed to break an electrical connection between the DC voltage source (20-i) and the power supply apparatus (1).

9. Electrical drive system according to Claim 7 or 8, wherein the DC voltage source (20-i) comprises a respective electrical energy store (21-i).

10. Electrical drive system according to Claim 9, wherein a storage capacity of the electrical energy store (21-i) matches a respective power draw to be expected for the corresponding electrical load (30-i).

11. Electrically driven missile, having an electrical drive system according to one of Claims 7 to 10.

## Revendications

1. Dispositif d'alimentation électrique (1) destiné à coupler une pluralité de sources de tension continue (20-i) à une pluralité de consommateurs électriques (30-i), dans lequel le nombre des sources de tension continue (20-i) correspond au nombre des consommateurs (30-i), et comprenant :
des premiers moyens de connexion (11-i) qui sont respectivement conçus pour connecter électriquement de manière directe une sortie d'une source de tension continue (20-i) à une entrée d'un consommateur électrique (30-i) ;
des deuxièmes moyens de connexion (12-i) qui sont respectivement conçus pour connecter électriquement une sortie d'une source de tension continue (20-i) à une entrée d'une charge électrique (30-i), dans lequel chaque deuxième moyen de connexion (12-i) comprend un circuit série constitué d'un premier élément de commutation (13-i), d'une première diode (14-i) et d'une deuxième diode (15-i), et la première diode (14-i) et la deuxième diode (15-i) sont connectées électriquement l'une à l'autre au niveau d'un noeud (K-i), et dans lequel tous les noeuds (K-i) sont connectés électriquement les uns aux autres ; et
un élément de commande (10, 10-i) qui est conçu pour commander conjointement les premiers éléments de commutation (13-i).

2. Dispositif d'alimentation électrique (1) selon la revendication 1, comprenant un moyen de surveillance (18) qui est conçu pour détecter un dysfonctionnement dans l'une des sources de tension continue (20-i) et/ou dans l'un des consommateurs électriques (30-i), dans lequel l'élément de commande (10, 10-i) est conçu pour ouvrir les premiers éléments de commutation (12-i) dans le cas où le moyen de surveillance (18) a détecté un dysfonctionnement.

3. Dispositif d'alimentation électrique (1) selon la revendication 1 ou 2, dans lequel les deuxièmes moyens de connexion (12-i) comprennent respectivement un deuxième élément de commutation (16-i) disposé en parallèle avec la première diode (14-i) et un troisième élément de commutation (17-i) disposé en parallèle avec la deuxième diode (15-i).

4. Dispositif d'alimentation électrique (1) selon la revendication 3, comprenant un moyen de commande (19) qui est conçu pour déterminer un courant électrique passant à travers une première diode (14-i) et/ou un courant électrique passant à travers une deuxième diode (15-i) et pour commander le deuxième élément de commutation (16-i) respectif et/ou le troisième élément de commutation (17-i) respectif dans le cas où le courant électrique passant à travers la première diode (14-i) correspondante et/ou la deuxième diode (15-i) dépasse une valeur de seuil prédéterminée.

5. Dispositif d'alimentation électrique (1) selon la revendication 4, dans lequel le moyen de commande (19) est conçu pour calculer le flux de courant électrique passant à travers les premières diodes (14-i) et/ou les deuxièmes diodes (15-i) dans un état de commutation des sources de tension continue (20-i) et/ou dans un état de commutation des consommateurs électriques (30-i).

6. Dispositif d'alimentation électrique (1) selon la revendication 4 ou 5, dans lequel le moyen de commande (19) est conçu pour déterminer le flux de courant électrique passant à travers les premières diodes (14-i) et/ou les deuxièmes diodes (15-i) sur la base de valeurs de mesure acquises par des capteurs dans les sources de tension continue (20-i) et/ou le consommateur électrique (30-i).

7. Système d'entraînement électrique, comprenant :
un dispositif d'alimentation électrique (1) selon l'une quelconque des revendications 1 à 6 ;
une pluralité de sources de tension continue (20-i) qui sont respectivement conçues pour délivrer une tension électrique continue ; et
une pluralité de consommateurs électriques (30-i) qui comprennent respectivement un dispositif d'entraînement électrique.

8. Système d'entraînement électrique selon la revendication 7, dans lequel les sources de tension continue (20-i) comprennent respectivement un moyen de coupure (22-i) qui est conçu pour couper une connexion électrique entre la source de tension continue (20-i) et le dispositif d'alimentation électrique (1).

9. Système d'entraînement électrique selon la revendication 7 ou 8, dans lequel les sources de tension continue (20-i) comprennent respectivement un dispositif de stockage d'énergie électrique (21-i).

10. Système d'entraînement électrique selon la revendication 9, dans lequel une capacité de stockage du dispositif de stockage d'énergie électrique (21-i) est respectivement adaptée à une consommation de puissance prévue du consommateur électrique (30-i) correspondant.

11. Missile à entraînement électrique comprenant un système d'entraînement électrique selon l'une quelconque des revendications 7 à 10.
